Europäisches Patentamt

European Patent Office

Office européen des brevets

(19)

(11) Numéro de publication: **0 382 644**

**A1**

(12) # DEMANDE DE BREVET EUROPEEN

(21) Numéro de dépôt: **90400351.4**

(51) Int. Cl.⁵: **B01D 53/36**

(22) Date de dépôt: **09.02.90**

(30) Priorité: **10.02.89 FR 8901728**

(43) Date de publication de la demande:
**16.08.90 Bulletin 90/33**

(84) Etats contractants désignés:
**DE FR GB IT**

(71) Demandeur: **CENTRE NATIONAL DE LA RECHERCHE SCIENTIFIQUE (CNRS)**
**15, Quai Anatole France**
**F-75700 Paris(FR)**

(72) Inventeur: **Keita, Bineta**
**24, rue Pierre Bonnard**
**F-9260 Fontenay-aux-Roses(FR)**
Inventeur: **Nadjo, Louis**
**15, avenue Nationale**
**F-91300 Massy(FR)**
Inventeur: **Contant, Roland**
**9, rue de la Source**
**F-91120 Palaiseau(FR)**
Inventeur: **Fournier, Michel**
**7, Cours des Chaumes**
**F-77380 Combs-La-Ville(FR)**
Inventeur: **Hervé, Gilbert**
**Route de Maincourt**
**F-78320 Levis Saint Nom(FR)**

(74) Mandataire: **Sueur, Yvette et al**
**Cabinet Yvette Sueur 35, rue de la Frette**
**F-95240 Cormeilles-en-Parisis(FR)**

(54) **Procédé de réduction catalytique de composés azotés et catalyseurs utilisés.**

(57) L'invention concerne un procédé de réduction de composés d'azote, ainsi que des catalyseurs pour la mise en oeuvre du procédé.

Le procédé selon l'invention est caractérisé en ce qu'il met en oeuvre un catalyseur répondant à la formule

$$[X_xM_mM'_{m'}O_zH_y]^{-n} \quad (II)$$

dans laquelle

- X représente au moins un élément choisi parmi Be, S, Se, I, les éléments de transition, les éléments du groupe IIIa, du groupe IVa, à l'exclusion de Pb, les éléments du groupe Va à l'exclusion de N et Bi,
- M représente au moins un élément choisi parmi Mo, W, V, Nb, Ta et Ti ;
- M' représente au moins un élément choisi parmi les alcalins, les alcalino-terreux, et Ru, Ag, Os, Pb, Bi, Tb, Pu, Cm, Cf ;
- chacun des $x$, $m$, $m'$, $z$ et $y$ étant tel que $0 \leq x \leq m + m'$, $m \neq 0$, $m' \leq 0$, $z \neq 0$, $y \geq 0$ et $n$ étant un entier $\geq 0$,

le catalyseur (II) étant réduit par fixation de p électrons, et les p électrons étant ensuite transférés sur le composé azoté (I) à réduire, p correspondant à la variation maximale de degré d'oxydation souhaité pour l'atome d'azote du composé azoté (I).

Le procédé selon l'invention permet de réduire les composés azotés de manière sélective.

## Procédé de réduction catalytique de composés azotés et catalyseurs utilisés

La présente invention a pour objet un procédé de réduction de composés d'azote, ainsi que des catalyseurs pour la mise en oeuvre dudit procédé.

Les composés d'azote qui sont concernés par la présente invention sont des composés répondant à la formule :

$$[N_a O_b H_c]^k \quad (I)$$

dans laquelle a, b, c et k sont des entiers tels que $1 \leq a \leq 2$, $O \leq b \leq 3$, $O \leq c \leq 5$, $-1 \leq k \leq 1$. Parmi ces composés, on peut citer les composés suivants, le degré d'oxydation de l'azote étant indiqué entre parenthèses à la suite de chaque composé :

$NO_3^-$ (+5), $N_2O_4$(+4), $NO_2$(+4), $NO_2^-$ (+3), $NO$-(+2), $N_2O$(+1), $H_2N_2O_2$(+1), $N_2$(O), $NH_2OH$(-1), $N_2H_4$(-2), $N_2H_5^-$ (-2), $NH_3$(-3), $NH_4^+$ (-3).

Parmi ces composés, certains sont toxiques, par exemple NO. C'est pourquoi de nombreux procédés de réduction de cet oxyde ont été décrits.

Généralement, les réductions directes se réalisent dans des conditions expérimentales sévères, soit avec des amalgames de métaux, c'est-à-dire à potentiel de réduction très élevé par rapport aux conditions proches de la thermodynamique, soit à haute température ou encore à haute pression, ce qui correspond à une dépense d'énergie importante. De tels procédés sont décrits par exemple dans US 4 143 120 équivalent à DE 2 509 204, FR 223 072, et US 4 160 013.

Par ailleurs, il convient de souligner l'importance pratique des dérivés de l'azote. A titre d'exemples, l'hydroxylamine et l'ammoniac sont largement reconnus comme deux produits intéressants. En effet l'hydroxylamine a une importance industrielle considérable, car elle sert d'intermédiaire dans la production du caprolactame, monomère du nylon 6. Par ailleurs, l'ammoniac est le seul composé inorganique de l'azote susceptible d'être transformé en molécule organique azotée dans le métabolisme par des microorganismes. Il faut ajouter que la fixation artificielle de l'azote par la conversion des divers oxydes de l'azote, qui sont des polluants, en composés présentant une valeur ajoutée, constitue en soi un but important. Par exemple, l'ammoniac est une source d'azote dans les engrais.

Or la réduction des oxydes de l'azote dans les milieux peu acides, neutres ou basiques est relativement difficile. On a alors mis au point des procédés de réduction catalysés par divers composés organiques. Toutefois, le principal inconvénient de ces procédés est le manque de stabilité des catalyseurs [Cf. I. TANIGUCHI et al, J. Electroanal. Chem. 224 (1987) 199]. En outre, ces catalyseurs sont en général des agents de transfert monoélectroniques successifs, défavorables à une sélectivité globale.

Les inventeurs ont maintenant mis au point un nouveau procédé permettant de réduire les composés d'azote (I) de manière sélective. Ce procédé met en oeuvre des catalyseurs qui sont généralement non toxiques, non polluants et stables à température élevée.

La présente invention a pour objet un procédé de réduction des composés d'azote (I).

Elle a également pour objet une famille de catalyseurs pour la réduction ds composés d'azote (I).

Le procédé selon l'invention, permettant la réduction de de composés azotés répondant à la formule

$$[N_a O_b H_c]^k \quad (I)$$

dans laquelle a, b, c et k sont des entiers tels que $1 \leq a \leq 2$, $O \leq b \leq 3$, $O \leq c \leq 5$, $1 \leq k \leq 1$, est caractérisé en ce qu'il met en oeuvre un catalyseur répondant à la formule

$$[X_x M_m M'_{m'} O_z H_y]^{n-} \quad (II)$$

dans laquelle

- X représente au moins un élément choisi parmi Be, S, Se, I, les éléments de transition, les éléments du groupe IIIa, du groupe IVa, à l'exclusion de Pb, les éléments du groupe Va à l'exclusion de N et Bi,

- M représente au moins un élément choisi parmi Mo, W, V, Nb, Ta et Ti ;

- M' représente au moins un élément choisi parmi les alcalins, les alcalino-terreux, et Ru, Ag, Os, Pb, Bi, Tb, Pu, Cm, Cf ;

- chacun des x, m, m', z et y étant tel que $O \leq x \leq m + m'$, $m \neq 0$, $m' \geq 0$, $z \neq 0$, $y \geq 0$ et n étant un entier $\geq 0$,

le catalyseur (II) étant réduit par fixation de p électrons, et les p électrons étant ensuite transférés sur le composé azoté (I) à réduire, p correspondant à la variation maximale de degré d'oxydation souhaité pour l'atome d'azote du composé azoté (I).

Les composés répondant à la formule (II) sont généralement connus et décrits, en particulier les hétéropolyanions dans lesquels M est le molybdène, ou le tungstène (Cf. M.T. POPE : "Heteropoly and Isopoly Oxometalates", Inorganic Chemistry Concepts 8; Springer-Verlag, Berlin, Heidelberg, New-York, Tokyo, 1983; G.A. TSIGDINOS dans "Heteropolycompounds of Molybdenum and Tungsten", Topics in Current Chemistry, 76, Springer-Verlag, Heidelberg, New-York, 1978).

Les hétéropolyanions les plus courants, généralement commerciaux sont ceux dans lesquels m = 12, m' = 0 avec x = 1 et y = 0. A titre d'exemples, on peut citer ceux qui dérivent des acides correspondants tels que l'acide silicotungstique $H_4(SW_{12}O_{40})$, l'acide phosphotungstique $H_3(PW_{12}O_{40})$, l'acide silicomolybdique $H_4(SiMo_{12}O_{40})$ l'acide borotunstique, l'acide germanotungstique, l'acide germanomolybdique.

Parmi les oxométallates utilisables comme catalyseurs dans la présente invention, on peut citer : $SiW_{12}O_{40}^{4-}$, $SiW_{11}O_{39}^{8-}$ 39, $Fe^{III}SiW_{11}O_{39}^{5-}$, $Fe_3^{III}$ $SiW_9O_{37}(H_2O)_3^{7-}$, $PW_{12}O_{40}^{3-}$, $PW_{11}O_{39}^{7-}$, $Fe^{III}PW_{11}O_{39}^{4-}$, $BW_{12}O_{40}^{5-}$, $SiMo_{12}O_{40}^{4-}$, $SiMo_{12}O_{39}Cr^{III}(H_2O)^{5-}$, $PMo_{12}O_{40}^{3-}$, $Co^{III}W_{12}O_{40}^{5-}$, $P_2W_{18}O_{62}^{6-}$, $P_2W_{17}O_{61}^{10-}$, $BW_{11}O_{39}H^{4-}$, $Fe^{III}P_2W_{17}O_{61}^{7-}$, $KAs_4W_{40}O_{140}^{*7-}$, $KAs_4W_{40}O_{140}Fe^{III}(H_2O)^{21-}$, $WO_4^{2-}$, $P_2W_{17}MoO_{62}^{6-}$, $H_2W_{12}O_{40}^{6-}$, $MoO_4^{2-}$ $VO_3^-$.

Les oxométallates peuvent être utilisés, soit sous forme de l'acide correspondant, soit sous forme de sel. Les sels de métaux, alcalins ou de métaux alcalino-terreux, sont particu lièrement intéressants. Parmi ces variantes, on choisira la forme stable dans les conditions opératoires et présentant une bonne solubilité dans le milieu réactionnel.

Le procédé selon l'invention peut être mis en oeuvre avantageusement à la température ordinaire. Une température comprise entre $20°$ et $25°C$ est particulièrement préférée.

L'un des avantages que présentent les oxométallates est l'existence d'états de réduction successifs, correspondant chacun à une forme réduite stable. Cette propriété permet de fixer sur l'oxométallate un nombre déterminé d'électrons correspondant à l'une des formes réduites, et à la variation maximale du degré d'oxydation souhaitée pour l'atome d'azote du composé (I) à réduire.

Il apparaît ainsi que les oxométallates (II) peuvent servir d'intermédiaires pour des transferts pluriélectroniques, nécessaires à la formation sélective des produits souhaités.

En outre, on sait que la réduction des oxydes d'azote dans les milieux peu acides, voire neutres ou basiques, présentent des difficultés. Ces difficultés peuvent être contournées par le procédé de l'invention car les oxométallates utilisables dans le procédé de l'invention présentent des domaines de stabilité très variables, et un choix judicieux de l'oxométallate permet d'effectuer une réduction dans n'importe quel domaine de pH, y compris les domaines généralement inaccessibles pour les systèmes catalytiques de l'art antérieur. De plus, l'oxométallate étant choisi comme catalyseur en fonction de sa stabilité au regard du pH du milieu réactionnel, il pourra accomplir de très nombreux cycles catalytiques sans subir de dégradation.

A titre d'exemple, $WO_4^{2-}$ est un catalyseur bien adapté à une réduction en milieu alcalin; $Fe^{III}P_2W_{17}O_{61}^{7-}$ est stable autour de pH = 7, et $SiMo_{11}O_{39}Cr^{III}(H_2O)^{5-}$ est stable autour de pH = 9.

Il est également possible, dans le procédé de l'invention, d'utiliser comme catalyseur, un mélange d'oxométallates. Le choix de l'oxométallate ou du mélange d'oxométallates comme catalyseur sera guidé par le but recherché : amélioration de la sélectivité vers un produit donné, augmentation du gain en potentiel, possibilité de transferts pluriélectroniques.

Il faut également noter que ces oxométallates sont en général non toxiques, non polluants et stables à température élevée.

Le procédé de réduction de composés d'azote (I) selon l'invention peut être mis en oeuvre par voie électrochimique. La réaction s'effectue alors dans une cellule électrochimique à deux compartiments comportant une électrode de référence, une électrode de travail et un électrolyte.

L'électrode de référence peut être une électrode au calomel saturée en KCl. L'électrode de travail est constituée par tout conducteur électronique, par exemple le platine, le nickel, le titane, l'or, le monel (alliage cuivre-nickel), le carbone ou un matériau revêtu de carbone (par exemple un acier inoxydable revêtu d'une peinture au graphite).

L'électrolyte est choisi de manière à présenter une force ionique et un pH appropriés. On peut utiliser, par exemple, une solution aqueuse de sulfate de sodium et d'acide sulfurique.

Le potentiel de travail est choisi en fonction de l'oxométallate utilisé comme catalyseur d'une part, de la variation maximale de degré d'oxydation souhaitée pour le composé azoté à réduire, c'est-à-dire du nombre p d'électrons à fixer sur le catalyseur d'autre part.

Ce potentiel est déterminé au préalable, par voltamétrie cyclique, à l'aide d'une cellule électrochimique analogue à celle mentionnée ci-dessus, utilisée pour la réduction, ou dans une cellule à un seul compartiment.

Sur le cyclovoltammogramme de l'oxométallate apparaissent des pics de réduction successifs correspondant chacun à la fixation sur l'oxométallate d'un nombre connu d'électrons. Le nombre total de pics de réduction observés correspond au nombre maximal d'électrons que l'oxométallate a fixés, et, qu'il pourra, par conséquent, transférer sur un composé d'azote.

La tension de travail utilisée pour réduire l'oxométallate est celle à laquelle est situé le pic correspondant au nombre d'électrons approprié.

La procédé de réduction par voie électrochimique selon l'invention peut être mis en oeuvre de manière discontinue. Dans ce cas, on introduit l'électrolyte dans le compartiment anodique de la cellule électrochimique. On introduit dans le compartiment cathodique, l'électrolyte et une quantité appropriée de catalyseur (II).

Dans une première étape, le catalyseur est réduit en appliquant à la cellule la tension appropriée pour obtenir le degré de réduction souhaité (tension déterminée au préalable par voltamétrie cyclique). On obtient en général une solution fortement colorée.

Dans une deuxième étape, on introduit le composé d'azote à réduire dans le compartiment cathodique contenant le catalyseur réduit. Il se produit alors, soit une réduction du composé d'azote, soit la fixation du composé d'azote sur le catalyseur réduit entrainant dans les deux cas une décoloration ou un changement de couleur du milieu réactionnel. Si le composé d'azote s'est fixé sur le catalyseur réduit, une réduction ultérieure permet d'obtenir le composé d'azote réduit souhaité.

Le procédé de réduction par voie électrochimique selon l'invention peut également être mis en oeuvre en continu. Dans ce cas, on introduit l'électrolyte dans le compartiment anodique de la cellule d'électrolyse. On introduit, dans le compartiment cathodique, l'électrolyte, une quantité appropriée de catalyseur (II) et une forte concentration du composé d'azote (I) que l'on souhaite réduire.

On impose alors à l'électrode de travail le potentiel (déterminé au préalable comme décrit ci-dessus) permettant d'obtenir la réduction du catalyseur au degré souhaité entraînant la réduction concomitante du composé d'azote (I).

Dans le cas du procédé électrochimique continu ou discontinu selon l'invention, la réduction du catalyseur, puis le transfert d'électrons du catalyseur réduit vers le composé d'azote se fait à un potentiel bien inférieur à celui qui serait nécessaire pour faire la réduction directe, sans catalyseur, du composé d'azote. Le procédé de réduction par voie électrochimique selon l'invention présente par conséquent l'avantage supplémentaire d'économiser l'énergie.

Dans une variante du procédé de réduction électrochimique selon l'invention, le catalyseur (II) est utilisé en solution dans l'électrolyte.

Dans une autre variante de ce procédé, le catalyseur est fixé sur un substrat inerte vis-à-vis du milieu réactionnel, par exemple, un polymère.

En outre, dans une troisième variante, le catalyseur (II) peut être déposé in situ sur une surface conductrice ou sur une surface semi-conductrice servant d'électrode, l'électrode étant ensuite activée conformément à un procédé décrit dans le brevet français n° 84 18094 (CNRS).

Le procédé de réduction de composés azotés (I) selon l'invention peut être mis en oeuvre par voie chimique. Dans cette variante du procédé selon l'invention, le catalyseur (II) est réduit par un agent réducteur. Comme agent réducteur, on peut citer tout agent réducteur classiquement connu, pourvu que son potentiel d'oxydo-réduction soit plus réducteur que celui d'au moins une étape rédox du catalyseur (II) et que la cinétique de réduction soit raisonnablement rapide.

Comme agent réducteur approprié, on peut citer par exemple les métaux, les amalgames, les hydrures métalliques. Le nombre maximal d'électrons fixés sur le catalyseur mis en présence de l'agent réducteur est fonction de l'agent réducteur utilisé.

Par exemple, l'amalgame de zinc réduit l'anion silicotungstique en un mélange de produits de réduction à un ou deux électrons.

La réduction des composés azotés par voie chimique peut être effectuée en milieu homogène, le catalyseur étant en solution dans le milieu réactionnel.

Elle peut aussi être effectuée en milieu hétérogène. Le catalyseur est alors fixé sur un substrat solide vis-à-vis du milieu réactionnel, par exemple sur un substrat polymérique.

Le procédé de réduction des composés (I) par voie chimique selon l'invention consiste à préparer une solution contenant une quantité appropriée de catalyseur (II), à introduire dans ladite solution un excès d'agent réducteur, puis à ajouter à cette solution de catalyseur réduit, le composé azoté (I) à réduire.

Les catalyseurs de réduction de composés d'azote selon l'invention sont caractérisés en ce qu'ils sont constitués par un oxométallate répondant à la formule générale

$$[X_x M_m M'_m O_z H_y]^{n-} \quad (II)$$

dans laquelle

- X représente au moins un élément choisi parmi Be, S, Se, I, les éléments de transition, les éléments du groupe IIIa, du groupe IVa, à l'exclusion de Pb, les éléments du groupe Va à l'exclusion de n et Bi,

- M représente au moins un élément choisi parmi Mo, W, V, Nb, Ta et Ti ;

- M' représente au moins un élément choisi parmi les alcalins, les alcalino-terreux et Ru, Ag, Os, Pb, Bi, Tb, Pu, Cm, Cf ;

- chacun des x, m, m', z et y étant tel que $O \leqq x \leqq m + m'$, $m \neq 0$, $m \geqq 0$, $z \neq 0$, $y \geqq 0$, n étant un entier $\geqq 0$ et $m' + x \neq 0$.

La présente invention sera expliquée plus en détail à l'aide des exemples suivants, donnés à titre illustratif non limitatif.

Dans tous les exemples, sauf mention contraire, on a utilisé une cellule d'électrolyse à deux compartiments, ou une cellule de voltamétrie à un compartiment comportant une électrode de travail de carbone vitreux (CV), une électrode de référence au calomel saturé en KCl (ECS). L'électrolyte était une solution aqueuse à 0,2 mole/l de $Na_2SO_4$, dont le pH a été ajusté à la valeur souhaitée à l'aide d'acide sulfurique. Cette solution a été dégazée à l'argon pur. La cellule a été maintenue sous atmosphère d'argon pendant le tracé de la courbe de voltamétrie cyclique, au cours de laquelle la vitesse de déroulement du potentiel était de 10 mV/s. La température à laquelle les réductions ont eu lieu était comprise entre 20°C et 25°C.

EXEMPLE 1

Réduction électrolytique de l'oxyde nitreux (NO), catalysée par l'hétéropolyanion lacunaire $\alpha_2 K_{10} P_2 W_{17} O_{61}$.

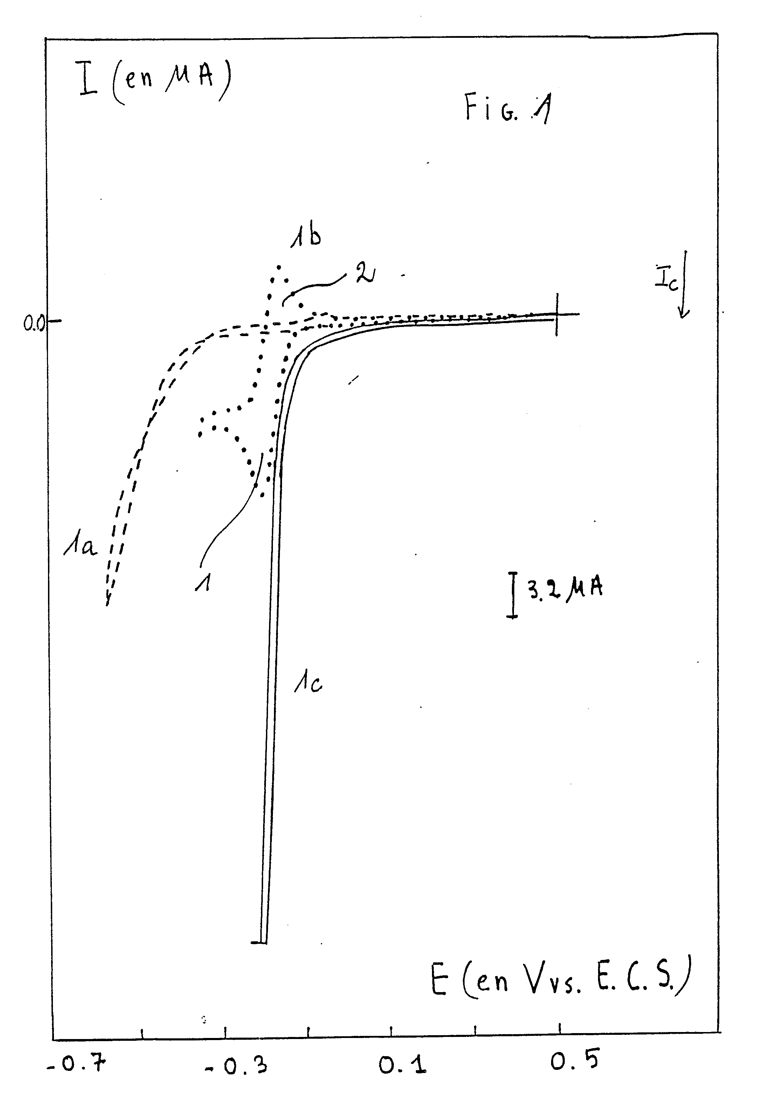

La figure 1 représente les cyclovoltamogrammes obtenus
- pour l'électrolyte saturé en NO (courbe 1a)
- pour un électrolyte contenant l'hétéropolyanion lacunaire $\alpha_2 K_{10} P_2 W_{17} O_{61}$ (courbe 1b)
- pour un électrolyte contenant $\alpha_2 K_{10} P_2 W_{17} O_{61}$ et saturé en NO (courbe 1c).
A l'échelle du tracé des courbes, le courant observé sur l'électrode de carbone vitreux est négligeable dans l'intervalle + 0,5 V à - 1,0 V vs ECS.

Détermination de la tension de réduction directe de NO.

Une solution à 0,2 mole/l de $Na_2 SO_4$ portée à pH = 3 à l'aide d'acide sulfurique, a été saturée en NO et soumise à une voltamétrie cyclique. La courbe 1a de la figure 1 représente le courant de réduction de NO sur l'électrode de carbone vitreux. Il apparaît sur cette courbe que la tension nécessaire pour la réduction directe de NO par électrolyse est de l'ordre de - 0,53 V vs ECS, pour une densité du courant cathodique de 229 $\mu A/cm^2$.

Détermination de la tension de réduction du catalyseur $\alpha_2 K_{10} P_2 W_{17} O_{61}$

On a préparé une solution à 0,2 mole/l de $Na_2 SO_4$, portée à pH = 3 à l'aide d'acide sulfurique, contenant $10^{-3}$ mole/l de catalyseur que l'on a soumise à une voltamétrie cyclique. La courbe 1b de la figure 1 représente le courant d'oxydo-réduction du catalyseur sur l'électrode de carbone vitreux. Une première vague de réduction (1) est observée à un potentiel de pic de l'ordre de - 0,200 V vs ECS. Cette réduction, correspondant à la fixation de 1 électron sur le catalyseur, apparaît comme parfaitement réversible, compte-tenu du pic d'oxydation (2) observé du côté des intensités de courant positives.

Réduction de NO en présence du catalyseur $\alpha_2 K_{10} P_2 W_{17} O_{61}$.

Par un procédé électrochimique en une seule étape, on a préparé une solution contenant 0,2 mole/l de $Na_2 SO_4$, 10 mole/l de catalyseur, à pH = 3, que l'on a soumise à une voltamétrie cyclique.
La courbe 1c de la figure 1 représente le courant de réduction catalytique de NO sur l'électrode en carbone vitreux : le potentiel de réduction est du même ordre que celui du catalyseur seul. On constate une très importante augmentation du courant de réduction au potentiel de la première réduction de $\alpha_2 K_{10} P_2 W_{17} O_{61}$. L'importance du courant et l'absence d'une courbe de réoxydation de l'oxométallate réduit traduisent l'effet de la réduction très efficace de NO par l'oxométallate réduit. Le gain en potentiel dépasse 370 mV pour une densité de courant de 229 $\mu A/cm^2$ entre la réduction directe de NO et sa réduction catalysée.
Le produit obtenu par réduction catalytique est $N_2 O$.

EXEMPLE 2

Réduction de NO, catalysée par l'hétéropolyanion lacunaire $\alpha_2 K_{10} P_2 W_{17} O_{61}$ par une électrolyse en deux étapes.

On a préparé une solution à pH 3 contenant $10^{-3}$ mole/l de $\alpha_2 K_{10} P_2 W_{17} O_{61}$, dont on a placé dix millilitres dans le compartiment cathodique d'une cellule d'électrolyse à deux compartiments. L'électrode de travail était en carbone vitreux. Le compartiment anodique contenait uniquement la solution à pH 3 sans oxométallate. Le compartiment cathodique a été dégazé avec de l'argon pur. Le potentiel de l'électrode de travail était fixé à - 0,25 V vs ECS. L'électrolyse a permis d'obtenir un produit de réduction de $\alpha_2 K_{10} P_2 W_{17} O_{61}$ dont la coloration était d'un bleu profond. L'admission d'oxyde nitrique dans la solution a entraîné une disparition immédiate de la coloration bleue, traduisant ainsi l'efficacité de la réduction catalytique de NO.

EXEMPLE 3

Réduction de l'ion nitrite ($NO_2^-$), catalysée par l'ion tungstate $WO_4^{2-}$ dans un procédé électrochimique à une étape.

On a d'abord déterminé le cyclovoltamogramme d'une solution à pH = 2 contenant $2 \times 10^{-3}$

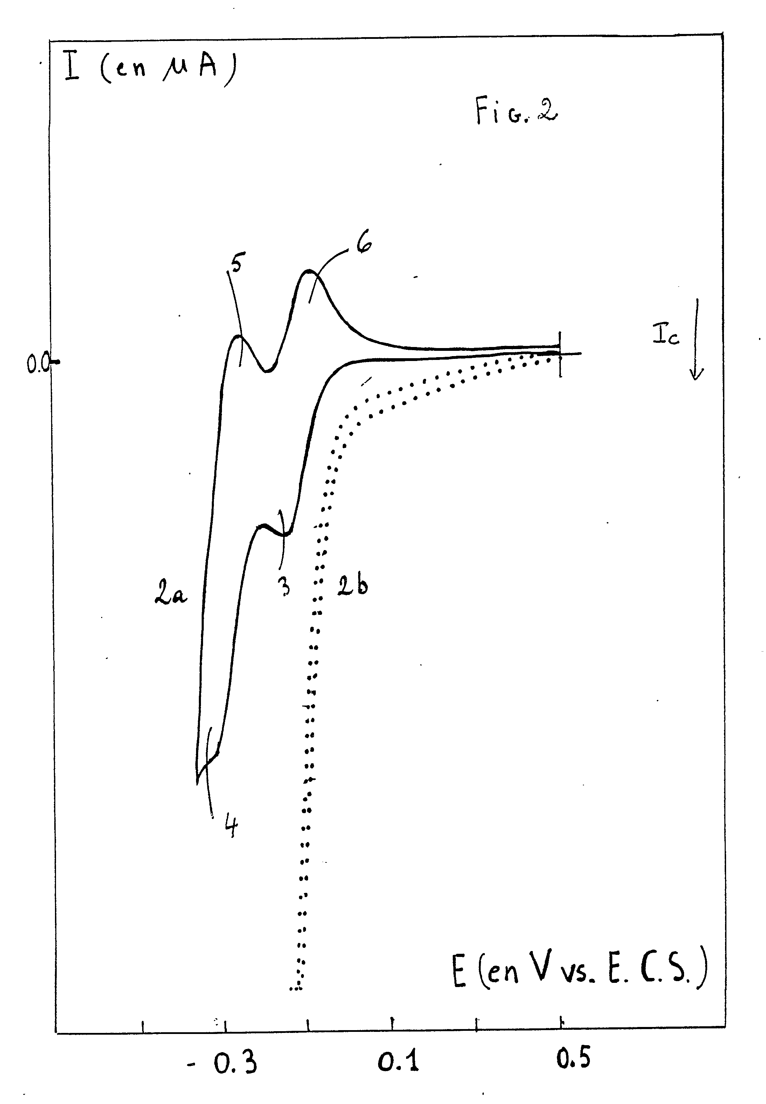

mole/l de Na$_2$WO$_4$. La courbe 2a de la figure 2 représente le voltamogramme cyclique obtenu sur électrode de carbone vitreux plongeant dans cette solution. Ce système reste stable et reproductible au cours de tracés successifs de courbes de voltamétrie cyclique.

Les pics (3) et (6) correspondent au premier système oxydoréducteur du tungstate, et les pics (4) et (5) à un second système oxydo-réducteur du tungstate.

On a ajouté à cette solution $5 \times 10^{-3}$ mole/l de NaNO$_2$. La courbe 2b de la figure 2 montre le voltamogramme obtenu sur électrode de carbone vitreux. L'importante augmentation du courant de réduction au potentiel du premier système oxydo-réducteur du catalyseur et l'absence de vague de réoxydation reflètent la catalyse de la réduction de l'ion nitrite. Le produit obtenu lors de cette réduction catalysée par le tungstate dépend du potentiel choisi pour l'électrolyse préparative. Dans le milieu à pH 2, et sur électrode de carbone vitreux, la réduction de l'ion nitrite sans catalyseur est observée à -0,800 V vs ECS, alors que, avec le catalyseur WO$_4^{2-}$, elle est observée à environ - 0,310 V vs ECS.

## EXEMPLES 4 et 5

Réduction de l'ion nitrite catalysée respectivement par $\alpha_2$K$_4$FePW$_{11}$O$_{39}$ et $\alpha_2$K$_7$FeP$_2$W$_{17}$O$_{61}$ dans un procédé à une étape.

De la même manière que dans l'exemple 1, on a tracé un cyclovoltamogramme pour chacun des catalyseurs ci-dessus à l'aide de solutions à pH 2,5, contenant 0,2 mole/l de sulfate de sodium et respectivement $10^{-3}$ mole/l de chaque catalyseur.

Pour chacun de ces catalyseurs, la voltamétrie cyclique montre des stades successifs de réduction donnant des espèces stables, ce qui se traduit par l'obtention de voltamogrammes où des vagues de réoxydation sont associées aux vagues de réduction et leur sont égales en intensité.

Ensuite, on a tracé la courbe de voltamétrie cyclique sur électrode de carbone vitreux de chacune des solutions de catalyseur ci-dessus, après y avoir ajouté NaNO$_2$ à raison de $5 \times 10^{-3}$ mole/l.

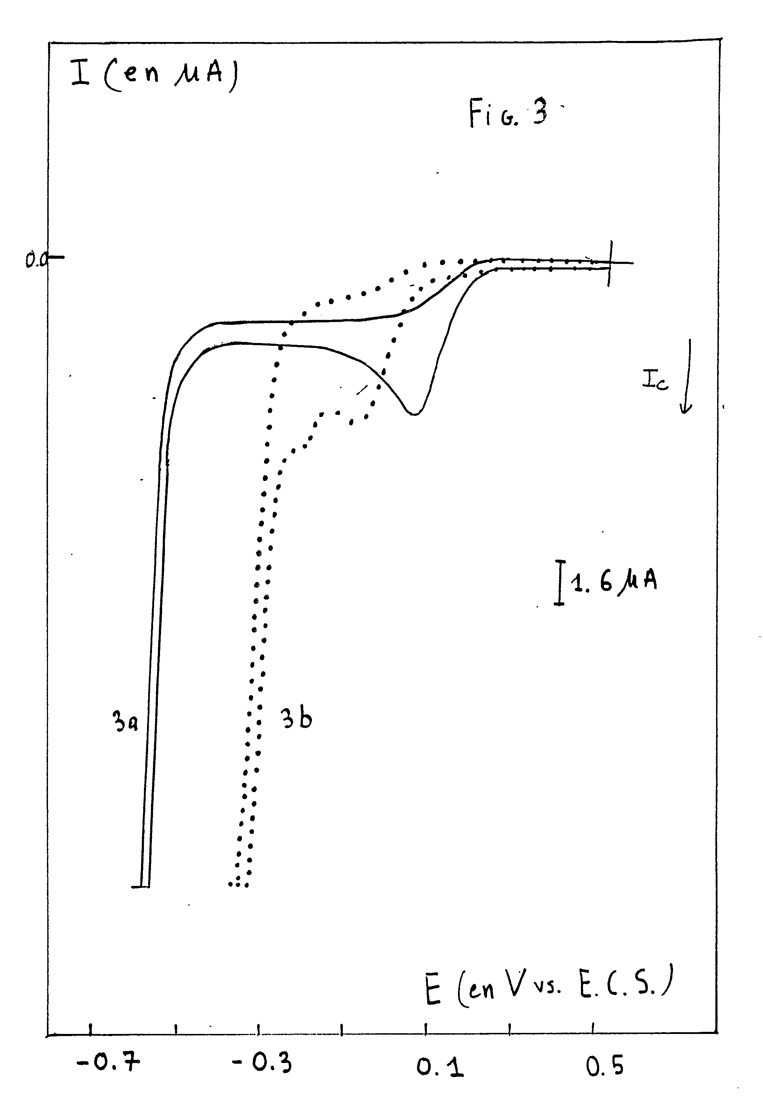

La courbe 3a de la figure 3 est le voltamogramme cyclique représentant la réduction catalysée par $\alpha$K$_4$FeP$_2$W$_{11}$O$_{39}$.

La courbe 3b de la figure 3 est le voltamogramme cyclique représentant la réduction catalysée par $\alpha_2$K$_4$FeP$_2$W$_{17}$O$_{61}$

Les courbes 3a et 3b de la figure 3 montrent un comportement partiellement différent de celui observé dans les exemples 1 et 3. La courbe 3a montre qu'il n'y a pas catalyse de la réduction du composé d'azote au potentiel de la première vague de réduction de $\alpha$K$_4$FePW$_{11}$O$_{39}$, mais le processus, de réversible qu'il était, devient irréversible. Il se forme un composé intermédiaire isolable. La réduction catalysée de l'ion nitrite, soit directement par l'oxométallate réduit, soit par le biais du composé intermédiaire, avec forte augmentation de courant, se produit à un potentiel plus élevé comme il apparaît sur la courbe 3a de la figure 3. Les mêmes observations sont faites sur la courbe 3b de la figure 3. La différence d'efficacité de la catalyse telle qu'elle ressort de la comparaison des deux courbes de la figure 3, montre l'influence du choix de l'oxométallate, toutes choses étant identiques par ailleurs, sur le gain en potentiel dans la réduction catalysée de l'ion nitrite.

De même, la comparaison entre l'exemple 3 d'une part, et les exemples 4 et 5 d'autre part, montre une différence, au moins apparente, dans le mécanisme de la réduction catalysée des composés de l'azote. Dans le cas de la formation d'un intermédiaire isolable, le gain en sélectivité peut être le facteur le plus important, la recherche d'un gain en potentiel devenant un facteur secondaire.

## EXEMPLES 6 à 20

On a effectué la réduction de différents composés d'azote à l'aide de catalyseurs variés selon le même mode opératoire que dans l'exemple 1. Les données particulières relatives à chaque exemple sont rassemblées dans le tableau I ci-dessous. Dans ce tableau, le potentiel indiqué en présence de catalyseur est la position de la vague permettant d'obtenir le produit final. En utilisant un potentiel de travail plus négatif, on peut orienter la réduction vers d'autres produits, tout en conservant le bénéfice de l'effet catalytique.

TABLEAU I

| Ex | Composé d'azote | | Catalyseur | | Potentiel de réduction | | pH |
|---|---|---|---|---|---|---|---|
| | Nature | Concentration $10^{-3}$m/l | Nature | Concentration $10^{-3}$m/l | sans catalyseur | avec catalyseur | |
| 6 | $NaNO_2$ | 5 | $\propto H_4SiW_{12}O_{40}$ | 1 | − 0,85 | − 0,25 | 3 |
| 7 | $NaNO_2$ | 5 | $\propto K_8SiW_{11}O_{39}$ | 1 | − 0,85 | − 0,68 | 3 |
| 8 | $NaNO_2$ | 5 | $\propto K_5FeSiW_{11}O_{39}$ | 1 | − 0,85 | − 0,67 | 3 |
| 9 | $NaNO_2$ | 5 | $\propto H_4SiMo_{12}O_{40}$ | 1 | − 0,85 | + 0,170 | 3 |
| 10 | $NaNO_2$ | 5 | $\propto K_5SiMo_{11}CrO_{39}$ | 1 | − 0,85 | + 0,020 | 3 |
| 11 | $NaNO_2$ | 5 | $\propto K_7PW_{11}O_{39}$ | 1 | − 0,85 | − 0,350 | 3 |
| 12 | $NaNO_2$ | 5 | $\propto K_4FePW_{11}O_{39}$ | 1 | − 0,85 | − 0,550 | 3 |
| 13 | $NaNO_2$ | 5 | $Na_2WO_4$ | 2 | − 0,80 | − 0,160 | 2 |
| 14 | $NaNO_2$ | 5 | $\propto_1 K_{10}P_2W_{17}O_{61}$ | 1 | − 0,85 | − 0,020 | 3 |

TABLEAU I (suite)

| Ex | Composé d'azote | | Catalyseur | | Potentiel de réduction | | pH |
|----|------|------|------|------|------|------|------|
| | Nature | Concentration $10^{-3}$m/l | Nature | Concentration $10^{-3}$m/l | sans catalyseur | avec catalyseur | |
| 15 | $NaNO_2$ | 5 | $\lambda_1$ $K_7FeP_2W_{17}O_{61}$ | 1 | $- 0,85$ | $- 0,500$ | 3 |
| 16 | $NaNO_2$ | 5 | $\lambda_2$ $K_{10}P_2W_{17}O_{61}$ | 1 | $- 0,85$ | $- 0,210$ | 3 |
| 17 | $NaNO_2$ | 5 | $\lambda_2$ $K_7FeP_2W_{17}O_{61}$ | 1 | $- 0,85$ | $- 0,300$ | 3 |
| 18 | $NaNO_2$ | 5 | $\lambda_1$ $K_7CoP_2W_{17}O_{61}$ | 1 | $- 0,85$ | $- 0,420$ | 3 |
| 19 | NO | barbottage 5 mn | $\lambda$ $K_8SiW_{11}O_{39}$ | 1 | $- 0,55$ | $- 0,270$ | 3 |
| 20 | NO | barbottage 5 mn | $\lambda_2$ $K_{10}P_2W_{17}O_{61}$ | 1 | $- 0,55$ | $- 0,150$ | 3 |

## Revendications

1. Procédé de réduction de composés azotés répondant à la formule

$$[N_aO_bH_c]^k \quad (I)$$

dans laquelle a, b, c et k sont des entiers tels que $1 \leq a \leq 2$, $O \leq b \leq 3$, $O \leq c \leq 5$, $1 \leq k \leq 1$, caractérisé en ce qu'il met en oeuvre un catalyseur répondant à la formule

$$[X_xM_mM'_mO_zH_y]^{-n} \quad (II)$$

dans laquelle

- X représente au moins un élément choisi parmi Be, S, Se, I, les éléments de transition, les éléments du groupe IIIa, du groupe IVa, à l'exclusion de Pb, les éléments du groupe Va à l'exclusion de N et Bi,

- M représente au moins un élément choisi parmi Mo, W, V, Nb, Ta et Ti ;

- M' représente au moins un élément choisi parmi les alcalins, les alcalino-terreux, et Ru, Ag, Os, Pb, Bi, Tb, Pu, Cm, Cf ;

- chacun des x, m, m', z et y étant tel que $O \leq x \leq m + m'$, $m = 0$, $m' \geq 0$, $z = 0$, $y \geq 0$ et n étant un entier $\geq 0$, le catalyseur (II) étant réduit par fixation de p électrons, et les p électrons étant ensuite transférés sur le composé azoté (I) à réduire, p correspondant à la variation maximale de degré d'oxydation souhaité pour l'atome d'azote du composé azoté (I).

2. Procédé selon la revendication 1, caractérisé en ce que la réduction est effectuée à une température comprise entre 20 et 25° C.

3. Procédé selon les revendications 1 et 2, caractérisé en ce que la réduction du catalyseur (II) est effectuée par voie électrochimique.

4. Procédé selon la revendication 3, caractérisé en ce que le potentiel, pour la réduction électrochimique du composé azoté (I) est le potentiel nécessaire pour fixer p électrons sur le catalyseur (II), ce potentiel étant déterminé au préalable par voltamétrie cyclique.

5. Procédé selon l'une quelconque des revendications 3 ou 4, caractérisé en ce que la réduction du composé azoté (I) est effectuée en deux étapes dans une cellule électrochimique à deux compartiments : au cours de la première étape, le catalyseur (II), présent dans le compartiment cathodique, est réduit par application de la tension appropriée ; dans une deuxième étape, le composé (I) est introduit dans le compartiment cathodique, et réagit avec la forme réduite du catalyseur (II).

6. Procédé selon l'une quelconque des revendications 3 ou 4, caractérisé en ce que la réduction est effectuée en une seule étape, dans une cellule électrochimique à deux compartiments, le catalyseur (II) et le composé (I) étant introduits simultanément dans le compartiment cathodique de la cellule électrochimique soumise à la tension appropriée.

7. Procédé selon l'une quelconque des revendications 3 à 6, caractérisé en ce que le catalyseur (II) est en solution dans un électrolyte.

8. Procédé selon l'une quelconque des revendications 3 à 6, caractérisé en ce que le catalyseur (II) est fixé sur un support solide inerte vis-à-vis des réactifs présents.

9. Procédé selon l'une quelconque des revendications 3 à 6, caractérisé en ce que le catalyseur (II) est fixé sur la cathode.

10. Procédé selon l'une quelconque des revendications 3 à 9, caractérisé en ce que l'électrolyte est une solution aqueuse de sulfate de sodium et d'acide sulfurique.

11. Procédé selon l'une des revendications 1 ou 2, caractérisé en ce que la réduction du catalyseur (II) est effectuée à l'aide d'un agent réducteur chimique qui présente une réactivité par rapport au catalyseur (II) supérieure à la réactivité à l'égard du composé azoté (I).

12. Procédé selon la revendication 11, caractérisé en ce que l'agent réducteur est choisi parmi les métaux, les amalgames, les hydrures métalliques.

13. Procédé selon l'une quelconque des revendications 11 et 12, caractérisé en ce que le catalyseur (II) est en solution.

14. Procédé selon l'une quelconque des revendications 11 et 12, caractérisé en ce que le catalyseur (II) est fixé sur un support solide inerte vis-à-vis des réactifs présents.

15. Procédé selon l'une quelconque des revendications 11 à 14, caractérisé en ce qu'il est effectué en deux étapes, la première étape consistant à réduire le catalyseur (II) à l'aide d'un agent réducteur chimique, la seconde étape consistant à effectuer la réduction du composé azoté (I) à l'aide de la forme réduite du catalyseur (II).

16. Procédé selon l'une quelconque des revendications 11 à 14, caractérisé en ce qu'il est effectué en une seule étape, l'agent réducteur, le catalyseur (II) et le composé azoté (I) à réduire étant mélangés dans les proportions appropriées.

17. Catalyseur de réduction de composés d'azote répondant à la formule

$$[N_aO_bH_c]^k \quad (I)$$

dans laquelle a, b, c et k sont des entiers tels que $1 \geq a \geq 2$, $O \leq b \leq 3$, $O \leq c \leq 5$, $-1 \leq k \leq 1$, caractérisé en ce qu'il est constitué par un oxométallate répondant à la formule générale

$$[X_xM_mM'_mO_zH_y]^{-n} \quad (II)$$

dans laquelle

- X représente au moins un élément choisi parmi Be, S, Se, I, les éléments de transition, les éléments du groupe IIIa, du groupe IVa, à l'exclusion de Pb, les éléments du groupe Va à l'exclusion de n et Bi.

- M représente au moins un élément choisi parmi Mo, W, V, Nb, Ta et Ti ;

- M' représente au moins un élément choisi parmi les alcalins, les alcalino-terreux et Ru, Ag, Os, Pb, Bi, Tb, Pu, Cm, Cf ;

- chacun des x, m, m', z et y étant tel que $0 \leq x \leq m + m'$, $m \neq 0$, $m' \geq 0$, $z \neq 0$, $y \geq 0$, n étant un entier $\geq 0$ et $m' + x \neq 0$.

Fig. 1

EP 0 382 644 A1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 143 120  (P.A. SERMON) * En entier * | 17 | B 01 D  53/36 |
| A |  | 1 | |
| X | US-A-4 160 013  (J.M. WHELAN) * En entier * | 17 | |
| A |  | 1 | |
| X | FR-A-2 223 072  (SUMITOMO CHEMICAL) * Revendications * | 17 | |
| A |  | 1 | |
| X | DE-A-2 509 204  (JOHNSON, MATTHEY & CO.) * Revendications * | 17 | |
| A |  | 1 | |

DOMAINES TECHNIQUES RECHERCHES (Int. Cl.5)

B 01 D

Le présent rapport a été établi pour toutes les revendications

| Lieu de la recherche | Date d'achèvement de la recherche | Examinateur |
|---|---|---|
| LA HAYE | 18-05-1990 | BOGAERTS M.L.M. |

EPO FORM 1503 03.82 (P0402)